# EUROPEAN PATENT APPLICATION

(11) **EP 4 722 520 A1**
(43) Date of publication of application: **08.04.2026**
(21) Application number: 24813732.5
(22) Date of filing: 02.02.2024
(51) Int. Cl.: F02D 13/02, F01L 1/344

(54) **CONTROL METHOD AND DEVICE, VEHICLE, AND STORAGE MEDIUM**

(30) Priority: 30.05.2023 CN 202310629901
(71) Applicant: Chongqing Changan Automobile Co., Ltd., Chongqing 400023 (CN)
(72) Inventor: JIANG, Ping, Chongqing 400023 (CN); YANG, Fangzi, Chongqing 400023 (CN); YANG, Xiaoqian, Chongqing 400023 (CN)
(74) Representative: Barker Brettell LLP
(86) International application number: PCT/CN2024/075618
(87) International publication number: WO 2024/244526

(57) **Abstract**

A control method, including: acquiring a target engine load corresponding to a setting type, an engine speed, and an actual engine load; determining a target angle corresponding to the setting type of a variable valve timing mechanism according to the engine speed, the actual engine load and the target engine load; and controlling an angle corresponding to the setting type of the variable valve timing mechanism according to the target angle. When the target engine load rapidly decreases while the actual engine load remains relatively high, by limiting the target angle corresponding to the setting type of the variable valve timing mechanism, the target angle corresponding to the setting type can be set to an angle that will not produce super knock, thereby reducing the probability of super knock, protecting the engine, and achieving better driving performance. A control apparatus, a vehicle, and a storage medium are also disclosed.

## Description

The present application claims priority to Chinese patent application No. 202310629901.6, filed with the China National Intellectual Property Administration on May 30, 2023 and entitled "CONTROL METHOD AND APPARATUS, VEHICLE, AND STORAGE MEDIUM", the disclosure of which is hereby incorporated by reference in its entirety.

### TECHNICAL FIELD

The present application relates to the field of vehicle technologies, more particularly, to a control method and apparatus, a vehicle, and a storage medium.

### BACKGROUND

With the widespread application of the gasoline engine turbocharging technology, the phenomenon of spontaneous combustion of the fuel/air mixture, also known as early ignition (also known as super knock in the industry, SK for short), is prone to occur before spark plug ignition. The super knock usually occurs under low-speed and high load operation conditions.

In addition, increasing a compression ratio can improve the thermal efficiency of the engine, which is an important method for achieving energy conservation and emission reduction in the gasoline engine. Hybrid-specific engines typically use gasoline engines with high compression ratios (with designed compression ratios reaching 15 or higher). However, the significant increase in compression ratio leads to higher energy density inside the combustion chamber, causing super knock to potentially occur in the engine under medium-low speed and medium-load operation conditions.

At present, in the industry, the control methods for the super knock typically involves parameter adjustments after the occurrence of the super knock. There are limited methods to suppress the super knock in advance by changing engine-related parameter settings.

### SUMMARY

The first objective of the present application is to provide a control method that can suppress super knock in advance. The second objective of the present application is to provide a control apparatus. The third objective of the present application is to provide a vehicle. The fourth objective of the present application is to provide a storage medium.

To achieve the above objectives, in a first aspect, the present application provides a control method, where the control method includes:
acquiring a target engine load corresponding to a setting type, an engine speed, and an actual engine load;
determining a target angle corresponding to the setting type of a variable valve timing mechanism according to the engine speed, the actual engine load and the target engine load;
controlling an angle corresponding to the setting type of the variable valve timing mechanism according to the target angle.

According to the above technical means, when the target engine load rapidly decreases while the actual engine load remains relatively high, by limiting the target angle corresponding to the setting type of the variable valve timing mechanism (VVT), the target angle corresponding to the setting type can be set to an angle that will not produce super knock, thereby reducing the probability of the super knock, protecting the engine, and achieving better driving performance.

In an implementation, the determining the target angle corresponding to the setting type of the variable valve timing mechanism according to the engine speed, the actual engine load and the target engine load, includes:
determining an anti-super knock angle corresponding to the setting type of the variable valve timing mechanism and an anti-super knock flag corresponding to the setting type of the variable valve timing mechanism according to the engine speed, the actual engine load and the target engine load;
determining the target angle according to the anti-super knock angle and the anti-super knock flag.

According to the above technical means, the target angle corresponding to the setting type of the VVT can be determined more quickly and accurately. In this way, the angle corresponding to the setting type of the VVT can be better controlled, thereby better avoiding the occurrence of the super knock.

In an implementation, the determining the anti-super knock angle corresponding to the setting type of the variable valve timing mechanism and the anti-super knock flag corresponding to the setting type of the variable valve timing mechanism according to the engine speed, the actual engine load and the target engine load, includes:
acquiring a state of a load selection switch corresponding to the setting type;
determining a selected engine load corresponding to the setting type according to the state of the load selection switch, the actual engine load and the target engine load;
determining the anti-super knock angle according to the engine speed and the selected engine load.

According to the above technical means, the anti-super knock angle corresponding to the setting type can be determined quickly and conveniently, facilitating subsequent control of the anti-super knock. This achieves better control of the angle corresponding to the setting type of the VVT and thus better avoids the occurrence of the super knock.

In an implementation, the determining the selected engine load corresponding to the setting type according to the state of the load selection switch, the actual engine load and the target engine load, includes:
if it is determined that the load selection switch is in a first state, determining the actual engine load as the selected engine load;
if it is determined that the load selection switch is in a second state, determining the target engine load as the selected engine load.

According to the above technical means, the selected engine load can be determined easily and quickly, thereby improving the efficiency of the entire method.

In an implementation, the determining the anti-super knock angle according to the engine speed and the selected engine load, includes:
acquiring configuration information corresponding to the setting type; where the configuration information includes a correspondence among the engine speed, the selected engine load, and the anti-super knock angle;
determining the anti-super knock angle according to the configuration information, the engine speed, and the selected engine load.

According to the above technical means, it is possible to search for the anti-super knock angle corresponding to the selected engine load and the engine speed from the configuration information. The entire method is convenient and fast, efficiently determining the anti-super knock angle, thereby improving the efficiency of anti-super knock control and further avoiding the occurrence of the anti-super knock.

In an implementation, the determining the anti-super knock angle corresponding to the setting type of the variable valve timing mechanism and the anti-super knock flag corresponding to the setting type of the variable valve timing mechanism according to the actual engine load and the target engine load, includes:
determining a load condition flag corresponding to the setting type according to the actual engine load;
determining an angle condition flag corresponding to the setting type according to the anti-super knock angle;
determining the anti-super knock flag according to the load condition flag and the angle condition flag.

The above technical means allows for a comprehensive determination of whether anti-super knock control is necessary for the angle of the VVT corresponding to the setting type, based on angle situation of the VVT and load situation of the engine corresponding to the setting type. This makes the anti-super knock control more accurate, and more precisely prevents the occurrence of the super knock.

In an implementation, the determining a target load condition flag corresponding to the setting type according to the actual engine load, includes:
acquiring an idle speed flag, an upper limit load threshold corresponding to the setting type, a lower limit load threshold corresponding to the setting type, and an original load condition flag corresponding to the setting type;
determining the target load condition flag according to the idle speed flag, the upper limit load threshold, the lower limit load threshold, the actual engine load, and the original load condition flag.

According to the above technical means, the efficiency of determining the target load condition flag can be further improved, thereby enhancing the efficiency of the anti-super knock control, and better avoiding the occurrence of the super knock.

In an implementation, the determining the target load condition flag according to the idle speed flag, the upper limit load threshold, the lower limit load threshold, the actual engine load, and the original load condition flag, includes:
if it is determined that the actual engine load is greater than the upper limit load threshold, and the idle speed flag is switched from reset to set, then determining the target load condition flag as set;
if it is determined that the actual engine load is less than the lower limit load threshold, and/or, the idle speed flag is switched from set to reset, then determining the target load condition flag as reset;
if it is determined that the actual engine load is greater than or equal to the lower limit load threshold and less than or equal to the upper limit load threshold, then determining the target load condition flag as the original load condition flag.

According to the above technical means, the target load condition flag can be quickly determined, further improving the efficiency of the entire method.

In an implementation, the determining the anti-super knock flag according to the load condition flag and the angle condition flag, includes:
if it is determined that the load condition flag is set, and the angle condition flag is set, then determining the anti-super knock flag as set;
if it is determined that the load condition flag is reset, and/or, the angle condition flag is reset, then determining the anti-super knock flag as reset.

According to the above technical means, the anti-super knock flag can be determined quickly, further improving the efficiency of the entire method.

In an implementation, the determining the angle condition flag corresponding to the setting type according to the anti-super knock angle, includes:
acquiring an initial value of the target angle corresponding to the setting type of the variable valve timing mechanism, and an actual angle corresponding to the setting type of the variable valve timing mechanism;
determining the angle condition flag according to the initial value of the target angle, the actual angle, and the anti-super knock angle.

According to the above technical means, the angle condition flag can be determined quickly and accurately, further improving the efficiency of the entire method.

In an implementation, when the setting type includes an intake type, the determining the angle condition flag according to the initial value of the target angle, the actual angle, and the anti-super knock angle, includes:
if it is determined that a greater value between the initial value of the target angle and the actual angle is greater than or equal to the anti-super knock angle, then determining the angle condition flag as set;
if it is determined that the greater value between the initial value of the target angle and the actual angle is less than the anti-super knock angle, then determining the angle condition flag as reset.

According to the above technical means, the angle condition flag corresponding to the intake type can be determined quickly and accurately, further improving the efficiency of the entire method.

In an implementation, when the setting type includes an exhaust type, the determining the angle condition flag according to the initial value of the target angle, the actual angle, and the anti-super knock angle, includes:
if it is determined that a smaller value between the initial value of the target angle and the actual angle is less than or equal to the anti-super knock angle, then determining the angle condition flag as set;
if it is determined that the smaller value between the initial value of the target angle and the actual angle is greater than the anti-super knock angle, then determining the angle condition flag as reset.

According to the above technical means, the angle condition flag corresponding to the exhaust type can be determined quickly and accurately, further improving the efficiency of the entire method.

In an implementation, when the setting type includes an intake type, the determining the target angle according to the anti-super knock angle and the anti-super knock flag, includes:
acquiring a setting value of a maximum angle corresponding to the intake type of the variable valve timing mechanism;
determining an upper limit value corresponding to the intake type according to the anti-super knock flag, the setting value of the maximum angle, and the anti-super knock angle corresponding to the intake type;
acquiring a setting value of a minimum angle corresponding to the intake type of the variable valve timing mechanism;
determining a smaller value between an initial value of the target angle corresponding to the intake type of the variable valve timing mechanism and the setting value of the minimum angle as a lower limit value corresponding to the intake type;
determining the target angle according to the upper limit value and the lower limit value.

According to the above technical means, the target angle corresponding to the intake type can be determined quickly and accurately, further improving the efficiency of the entire method.

In an implementation, when the setting type includes an exhaust type, the determining the target angle according to the anti-super knock angle and the anti-super knock flag, includes:
acquiring a setting value of a maximum angle corresponding to the exhaust type of the variable valve timing mechanism;
determining a greater value between an initial value of the target angle corresponding to the exhaust type of the variable valve timing mechanism and the setting value of the maximum angle corresponding to the exhaust type as an upper limit value corresponding to the exhaust type;
acquiring a setting value of a minimum angle corresponding to the exhaust type of the variable valve timing mechanism;
determining a lower limit value corresponding to the exhaust type according to the anti-super knock flag, the setting value of the minimum angle, and the anti-super knock angle;
determining the target angle according to the upper limit value and the lower limit value.

According to the above technical means, the target angle corresponding to the exhaust type can be determined quickly and accurately, further improving the efficiency of the entire method.

In an implementation, the setting type includes an intake type and/or an exhaust type.

According to the above technical means, when the target engine load decreases rapidly while the actual engine load remains relatively high, a target intake angle and a target exhaust angle of the VVT can be limited. The target intake angle can be set to a intake angle that will not produce the super knock, and the target exhaust angle can be set to an exhaust angle that will not produce the super knock. This reduces the probability of the super knock, protects the engine, and achieves better driving performance.

In a second aspect, the present application also provides a control apparatus, where the control apparatus includes:
an acquiring module, configured to acquire a target engine load corresponding to a setting type, and an actual engine load;
a determining module, configured to determine a target angle corresponding to the setting type of a variable valve timing mechanism according to the engine speed, the actual engine load and the target engine load;
a controlling module, configured to control an angle corresponding to the setting type of the variable valve timing mechanism according to the target angle.

To achieve the above objectives, in a third aspect, the present application also provides a vehicle. The vehicle includes a processor and a memory. The processor is configured to execute a control program of the vehicle stored in the memory to implement the control method as described above.

According to the above technical means, when the target engine load rapidly decreases while the actual engine load remains relatively high, by limiting the target angle corresponding to the setting type of the variable valve timing mechanism (VVT), the target angle corresponding to the setting type can be set to an angle that will not produce super knock, thereby reducing the probability of the super knock, protecting the engine, and achieving better driving performance.

To achieve the above objectives, in a fourth aspect, the present application also provides a storage medium. The storage medium stores one or more programs, which can be executed by one or more processors to implement the control method as described above.

According to the above technical means, when the target engine load rapidly decreases while the actual engine load remains relatively high, by limiting the target angle corresponding to the setting type of the variable valve timing mechanism (VVT), the target angle corresponding to the setting type can be set to an angle that will not produce super knock, thereby reducing the probability of the super knock, protecting the engine, and achieving better driving performance.

In combination with the above technical solution, in the present application, the target angle corresponding to the setting type of the VVT can be determined through the target engine load corresponding to the setting type, the engine speed, and the actual engine load, and the angle corresponding to the setting type of the VVT is then controlled according to the above target angle. This allows for better adjustment of the angle corresponding to the setting type of the VVT before the occurrence of the super knock. That is to say, in the present application, when the target engine load rapidly decreases while the actual engine load remains relatively high, by limiting the target angle corresponding to the setting type of the VVT, the target angle corresponding to the setting type can be set to an angle that will not produce super knock, thereby suppressing the super knock in advance and reducing the probability of the super knock, better protecting the engine, and achieving better driving performance and enhanced driving experience.

### BRIEF DESCRIPTION OF DRAWINGS

FIG. 1 shows a schematic flowchart of a control method provided by an embodiment of the present application.
FIG. 2 shows a schematic flowchart of a control method provided by an embodiment of the present application.
FIG. 3 shows a schematic flowchart of a control method provided by an embodiment of the present application.
FIG. 4 shows a schematic flowchart of a control method provided by an embodiment of the present application.
FIG. 5 shows a schematic flowchart of a control method provided by an embodiment of the present application.
FIG. 6 shows a schematic flowchart of a control method provided by an embodiment of the present application.
FIG. 7 shows a schematic flowchart of a control method provided by an embodiment of the present application.
FIG. 8 shows a schematic flowchart of a control method provided by an embodiment of the present application.
FIG. 9 shows a schematic flowchart of a control method provided by an embodiment of the present application.
FIG. 10 shows a schematic structural diagram of a control apparatus provided by an embodiment of the present application.
FIG. 11 shows a schematic structural diagram of a vehicle provided by an embodiment of the present application.

### Reference signs:

10: acquiring module; 20: determining module; 30: controlling module;
300: vehicle; 301: processor; 302: memory; 3021: operating system; 3022: application program; 303: user interface; 304: network interface; 305: bus system.

### DESCRIPTION OF EMBODIMENTS

The embodiments of the present application will be illustrated below with reference to the accompanying drawings and preferred embodiments. The person skilled in the art can easily understand other advantages and effects of the present application from the content disclosed in the specification. The application can also be implemented or applied through different specific implementations, and various details in the specification can be modified or changed based on different perspectives and applications without departing from the spirit of the application. It should be understood that the preferred embodiments are only intended to illustrate the present application and not to limit the protection scope of the present application.

It should be noted that the drawings provided in the following embodiments only illustrate the basic concept of the present application in a schematic manner. Therefore, the drawings only show the components related to the present application and are not drawn according to the numbers, shapes, and sizes of the components in actual implementations. The form, quantity, and proportion of each component in actual implementations can be arbitrarily changed, and the layout of the components may also be more complex.

The embodiments of the present application will be illustrated below with reference to the accompanying drawings and preferred embodiments. The person skilled in the art can easily understand other advantages and effects of the present application from the content disclosed in the specification. The application can also be implemented or applied through different specific implementations, and various details in the specification can be modified or changed based on different perspectives and applications without departing from the spirit of the application. It should be understood that the preferred embodiments are only intended to illustrate the present application and not to limit the protection scope of the present application.

For the convenience of understanding the embodiments of the present application, the specific embodiments will be further illustrated below in conjunction with the accompanying drawings. The embodiments do not constitute limitations on the embodiments of the present application.

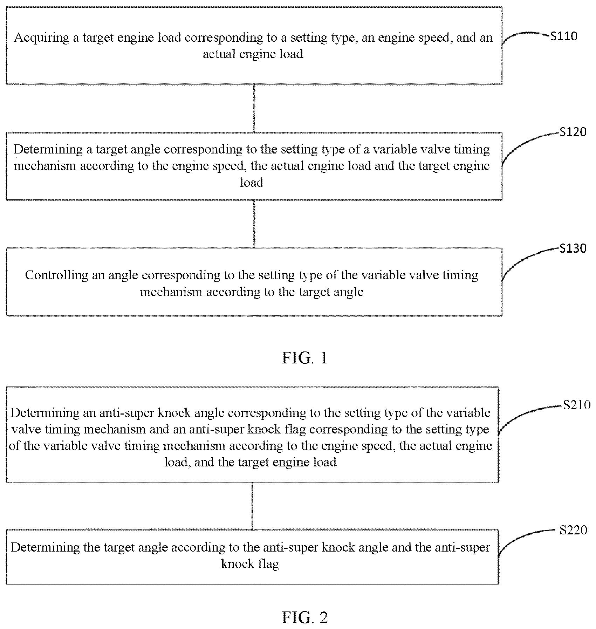

The present embodiment provides a control method that can be applied to a vehicle. Referring to FIG. 1, the control method may include:
S110, acquiring a target engine load corresponding to a setting type, an engine speed, and an actual engine load;
S120, determining a target angle corresponding to the setting type of a variable valve timing mechanism according to the engine speed, the actual engine load and the target engine load; and
S130, controlling an angle corresponding to the setting type of the variable valve timing mechanism according to the target angle.

In step S110, the vehicle may be equipped with an engine speed detection apparatus, which can be configured to detect the engine speed of the vehicle. The engine speed detection apparatus may include a speed sensor or other devices that can be used to detect the engine speed, and there is no limitation in this regard. In the step, the vehicle can acquire the engine speed by detecting the engine speed through the engine speed detection apparatus.

The vehicle can be equipped with an engine load detection apparatus, which can be configured to detect the actual engine load of the vehicle. The specific composition of the engine load detection apparatus can be set according to actual requirements, and there is no limitation in this regard. In the step, the vehicle can detect the actual engine load by detecting the actual engine load through the engine load detection apparatus.

The vehicle may include a storage unit that can store the target engine load corresponding to the setting type. In the step, the vehicle can retrieve the target engine load from the storage unit.

The setting type can include an exhaust type. The setting type can also include an intake type. That is, the storage unit can store the target engine load corresponding to the intake. The storage unit can also store the target engine load corresponding to the exhaust, and there is no limitation in this regard. Among them, the target engine load corresponding to the intake can be referred to as an intake side target load, and the target engine load corresponding to the exhaust can be referred to as an exhaust side target load.

It should be noted that in addition to acquiring the target engine load corresponding to the setting type, the engine speed and the actual engine load through the above methods, the vehicle can also acquire the above information through other methods, and there is no limitation in this regard.

In step S120, through extensive data analysis, the occurrence of super knock is strongly correlated with rapid changes of related angles in the VVT. Because the angle of the VVT quickly returns to its initial position (usually designed as a position with a relatively small valve overlap angle), the inflation efficiency drops sharply, and the actual compression ratio will quickly increase, which can easily trigger the super knock.

In the step, after acquiring the target engine load corresponding to the setting type, the engine speed, and the actual engine load, the vehicle can determine the target angle corresponding to the setting type of the VVT based on the above information. This helps avoid sudden changes in the angle corresponding to the setting type of the VVT, which may cause the super knock.

In some implementations, the target angle of the intake type of the VVT (that is, the target intake angle of the VVT) can be determined based on the engine speed, the actual engine load, and the target engine load of the intake type.

In some implementations, the target angle of the exhaust type of the VVT (that is, the target exhaust angle of the VVT) can be determined based on the engine speed, the actual engine load, and the target engine load of the exhaust type.

In step S130, after determining the target angle corresponding to the setting type of the VVT, the vehicle controls the angle corresponding to the setting type of the VVT based on the above target angle, thereby avoiding sudden changes in the angle corresponding to the setting type of the VVT and better preventing the occurrence of the super knock.

When the setting type is the intake type, the target angle of the intake type of the VVT can be referred to as the target intake angle of the VVT. After determining the target intake angle of the VVT, the vehicle can adjust the intake of the VVT to an angle that matches the above target intake angle. For example, when a minimum angle of the target intake angle is A1 and a maximum angle of the target intake angle is A2, the intake angle of the VVT can be adjusted to an angle between A1 and A2, to better avoid the occurrence of the super knock caused by sudden changes in the intake angle of the VVT.

When the setting type is the exhaust type, the target angle of the exhaust type of the VVT can be referred to as the target exhaust angle of the VVT. After determining the target exhaust angle of the VVT, the vehicle can adjust the exhaust of the VVT to an angle that matches the above target exhaust angle. For example, when a minimum angle of the target exhaust angle is B1 and a maximum angle of the target exhaust angle is B2, the exhaust angle of the VVT can be adjusted to an angle between B1 and B2, to better avoid the occurrence of the super knock caused by sudden changes in the exhaust angle of the VVT.

In the method, the vehicle can determine the target angle corresponding to the setting type of the variable valve timing mechanism (VVT) through the target engine load corresponding to the setting type, the engine speed, and the actual engine load, and then control the angle corresponding to the setting type of the VVT according to the above target angle. This allows for better adjustment of the angle corresponding to the setting type of the VVT before the occurrence of the super knock, thereby suppressing the super knock in advance and reducing the probability of the super knock, better protecting the engine, and achieving better driving performance and improving driving experience.

It should be noted that when the setting type includes the intake type and the exhaust type, this method can be applied to hybrid-specific high compression ratio gasoline engines. When the target engine load decreases rapidly while the actual engine load remains relatively high, a target intake angle and a target exhaust angle of the VVT can be limited. The target intake angle can be set to an intake angle that will not produce the super knock, and the target exhaust angle can be set to an exhaust angle that will not produce the super knock. This reduces the probability of the super knock, protects the engine, and achieves better driving performance.

The present embodiment provides a control method that can be applied to a vehicle. Referring to FIG. 2, in the method, the determination of the target angle corresponding to the setting type of the variable valve timing mechanism according to the engine speed, the actual engine load and the target engine load may include:
S210, determining an anti-super knock angle corresponding to the setting type of the variable valve timing mechanism and an anti-super knock flag corresponding to the setting type of the variable valve timing mechanism according to the engine speed, the actual engine load and the target engine load; and
S220, determining the target angle according to the anti-super knock angle and the anti-super knock flag.

In step S210, the anti-super knock angle may refer to a maximum angle that prevents the vehicle from experiencing the super knock.

The anti-super knock angle of the intake type can be referred to as an intake anti-super knock angle. When the intake anti-super knock angle is C, it means that a maximum intake angle that prevents the vehicle from experiencing the super knock is C. That is to say, when it is necessary to suppress the super knock, the intake angle of the VVT should be set to an angle less than or equal to C.

The anti-super knock angle of the exhaust type can be referred to as an exhaust anti-super knock angle. When the exhaust anti-super knock angle is D, it means that a maximum exhaust angle that prevents the vehicle from experiencing the super knock is D. That is to say, when it is necessary to suppress the super knock, the exhaust angle of the VVT should be set to an angle less than or equal to D.

In step , the anti-super knock flag can indicate whether anti-super knock control is necessary for the angle of the VVT.

The anti-super knock flag may include two states, namely a set state and a reset state. When the anti-super knock flag is "set", it indicates that the vehicle needs to perform the anti-super knock control on the angle of the VVT. When the anti-super knock flag is "reset", it indicates that the vehicle does not need to perform the anti-super knock control on the angle of the VVT.

The anti-super knock flag of the intake type can be referred to as the intake anti-super knock flag. When the intake anti-super knock flag is "set", it indicates that the vehicle needs to perform the anti-super knock control on the intake angle of the VVT. When the intake anti-super knock flag is "reset", it indicates that the vehicle does not need to perform the anti-super knock control on the intake angle of the VVT.

The anti-super knock flag of the exhaust type can be referred to as the exhaust anti-super knock flag. For the introduction of the exhaust anti-super knock flag, reference can be made to the above intake anti-super knock flag, which will not be repeated for brevity.

In the steps, after determining the engine speed, the actual engine load, and the target engine load, the vehicle can determine the anti-super knock angle corresponding to the setting type of the VVT and the anti-super knock flag corresponding to the setting type of the VVT based on the above information, thereby facilitating subsequent anti-super knock control.

The intake anti-super knock angle and the intake anti-super knock flag of the VVT can be determined based on the target engine load of the intake type, the engine speed, and the actual engine load. The exhaust anti-super knock angle and the exhaust anti-super knock flag of the VVT can be determined based on the target engine load of the exhaust type, the engine speed, and the actual engine load.

In step S220, after determining the anti-super knock angle and the anti-super knock flag corresponding to the setting type, the vehicle can determine the target angle corresponding to the setting type of the VVT based on the above anti-super knock flag and anti-super knock angle, and then control the angle corresponding to the setting type of the VVT based on the above target angle, thereby better avoiding the occurrence of the super knock.

The target intake angle of the VVT can be determined based on the intake anti-super knock angle and the intake anti-super knock flag, to control the intake angle of the VVT. The target exhaust angle of the VVT can be determined based on the exhaust anti-super knock angle and the exhaust anti-super knock flag, to control the exhaust angle of the VVT.

In the method, the anti-super knock angle corresponding to the setting type of the variable valve timing mechanism and the anti-super knock flag corresponding to the setting type of the variable valve timing mechanism can be determined based on the target engine load corresponding to the setting type, the engine speed, and the actual engine load. Then, based on the above anti-super knock angle and anti-super knock flag, the target angle corresponding to the setting type of the VVT can be determined more quickly and accurately. In this way, the angle corresponding to the setting type of the VVT can be better controlled, thereby better avoiding the occurrence of the super knock.

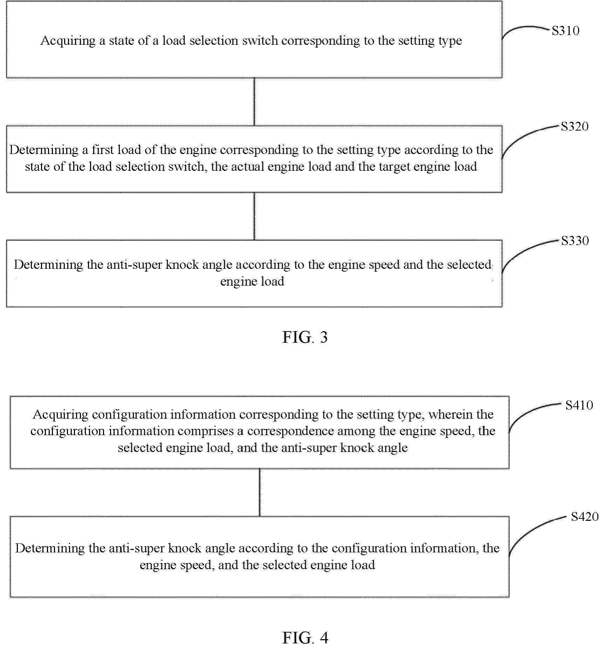

The present embodiment provides a control method that can be applied to a vehicle. Referring to FIG. 3, in the method, the determination of the anti-super knock angle corresponding to the setting type of the variable valve timing mechanism according to the engine speed, the actual engine load and the target engine load may include:
S310, acquiring a state of a load selection switch corresponding to the setting type;
S320, determining a first engine load corresponding to the setting type according to the state of the load selection switch, the actual engine load and the target engine load; and
S330, determining the anti-super knock angle according to the engine speed and the selected engine load.

In step S310, the vehicle may be equipped with the load selection switch corresponding to the setting type. The load selection switch corresponding to the setting type is configured to select the selected engine load corresponding to the anti-super knock angle of the setting type.

The load selection switch corresponding to the intake type can be referred to as a first load selection switch. The first load selection switch can be configured to select the selected engine load corresponding to the intake anti-super knock angle. The selected engine load can be referred to as a first load.

The load selection switch corresponding to the exhaust type can be referred to as a second load selection switch. The second load selection switch can be configured to select the selected engine load corresponding to the exhaust anti-super knock angle. The selected engine load can be referred to as a second load.

In step S320, the state of the load selection switch may include a first state and a second state. The first state can be referred to as "0", and the second state can be referred to as "1".

If the state of the load selection switch corresponding to the setting type is "0", that is, the load selection switch is in the first state, then the actual engine load can be determined as the selected engine load corresponding to the setting type. If the state of the load selection switch corresponding to the setting type is "1", that is, the load selection switch is in the second state, then the target engine load corresponding to the setting type can be determined as the selected engine load corresponding to the setting type.

For example, if the state of the load selection switch corresponding to the intake type is "0", the actual engine load can be determined as the first load. If the state of the load selection switch corresponding to the intake type is "1", the target engine load corresponding to the intake type can be determined as the first load.

For another example, if the state of the load selection switch corresponding to the exhaust type is "0", the actual engine load can be determined as the second load. If the state of the load selection switch corresponding to the exhaust type is "1", the target engine load corresponding to the exhaust type can be determined as the second load.

It should be noted that in addition to determining the selected engine load corresponding to the setting type through the above methods, the selected engine load can also be determined through other methods, and there is no limitation in this regard.

In step S330, after determining the engine speed and the selected engine load corresponding to the setting type, the vehicle can determine the anti-super knock angle corresponding to the setting type based on the above information.

The intake anti-super knock angle of the VVT can be determined based on the engine speed and the first load. The exhaust anti-super knock angle of the VVT can be determined based on the engine speed and the second load.

There is a certain correspondence among the selected engine load and the engine speed, and the anti-super knock angle. A relationship curve or a relationship formula, etc. can be obtained through fitting based on the above correspondence, and then the selected engine load and the engine speed can be processed based on the above relationship curve or relationship formula to determine their corresponding anti-super knock angle.

It should be noted that in addition to determining the anti-super knock angle through the above methods, the anti-super knock angle can also be determined through other methods, and there is no limitation in this regard.

In the method, based on the state of the load selection switch, the selected engine load that can be used to determine the anti-super knock angle can be selected from the actual engine load and the target engine load. Then, the corresponding anti-super knock angle can be determined based on the engine speed and the above selected engine load. The entire method is simple and reliable. The anti-super knock angle corresponding to the setting type can be determined quickly and conveniently, facilitating subsequent control of the anti-super knock. This achieves better control of the angle corresponding to the setting type of the VVT and thus better avoids the occurrence of the super knock.

The present embodiment provides a control method that can be applied to a vehicle. Referring to FIG. 4, in the method, the determination of the anti-super knock angle according to the engine speed and the selected engine load may include:
S410, acquiring configuration information corresponding to the setting type, where the configuration information includes a correspondence among the engine speed, the selected engine load, and the anti-super knock angle; and
S420, determining the anti-super knock angle according to the configuration information, the engine speed, and the selected engine load.

In step S410, the configuration information corresponding to the setting type may include configuration information corresponding to the intake type and configuration information corresponding to the exhaust type. The configuration information corresponding to the intake type can be referred to as first configuration information. The configuration information corresponding to the exhaust type can be referred to as second configuration information.

The configuration information may include a correspondence among the engine speed, the selected engine load, and the anti-super knock angle. That is to say, the first configuration information may include a correspondence among the engine speed, the first load and the intake anti-super knock angle. The second configuration information may include a correspondence among the engine speed, the second load, and the exhaust anti-super knock angle.

In the step, the vehicle can acquire pre-stored configuration information from its storage unit or from other places, and there is no limitation in this regard.

When the above configuration information is pre-stored in a vehicle's storage unit, it can be either pre-configured at the factory or post-configured after the vehicle's delivery, and there is no limitation in this regard. In addition, after the above configuration information is set, it can also be modified later to better meet the different requirements of users.

It should be noted that the specific form of the configuration information is not limited, and it can be in the form of a configuration table or in other forms, and there is no limitation in this regard.

In step S420, after acquiring the configuration information, the engine speed, and the selected engine load, the vehicle can search for an angle corresponding to the above engine speed and selected engine load from the configuration information, and determine the angle as the anti-super knock angle corresponding to the above engine speed and selected engine load.

In some implementation,

### Map1

| Engine speed | First load | Intake anti-super knock angle |
|---|---|---|
| n1 | m11 | x11 |
| n1 | m12 | x12 |
| n2 | m11 | x13 |
| n2 | m12 | x14 |

### Map2

| Engine speed | Second load | Intake anti-super knock angle |
|---|---|---|
| n1 | m21 | x21 |
| n1 | m22 | x22 |
| n2 | m21 | x23 |
| n2 | m22 | x24 |

The first configuration information can be referred to as an intake anti-super knock angle setting table, and the second configuration information can be referred to as an exhaust anti-super knock angle setting table. The intake anti-super knock angle setting table can refer to the above Map1, and the exhaust anti-super knock angle setting table can refer to the above Map2.

In the implementation, if the engine speed is determined to be n1 and the first load is determined to be m11, the intake anti-super knock angle can be determined to be x11 based on the intake anti-super knock angle setting table (i.e. Map1). If the engine speed is determined to be n2 and the first load is determined to be m21, the intake anti-super knock angle can be determined to be x23 based on the exhaust anti-super knock angle setting table (i.e. Map2).

The specific data corresponding to each parameter in the above tables can take a specific value or a value range, and there is no limitation in this regard. For example, n1 can be a specific value or a value range. For another example, m21 can be a specific value or a value range.

It should be noted that in addition to determining the anti-super knock angle through the above methods, the anti-super knock angle can also be determined through other methods, and there is no limitation in this regard.

In the method, it is possible to search for the anti-super knock angle corresponding to the selected engine load and the engine speed from the configuration information. The entire method is convenient and fast, efficiently determining the anti-super knock angle, thereby improving the efficiency of anti-super knock control and further avoiding the occurrence of the anti-super knock.

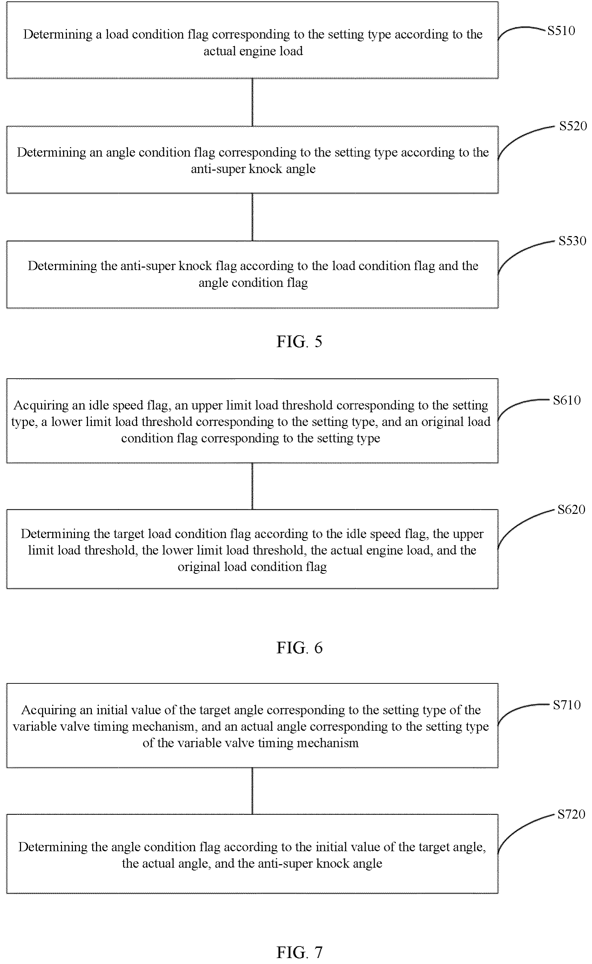

The present embodiment provides a control method that can be applied to a vehicle. Referring to FIG. 5, in the method, the determination of the anti-super knock flag corresponding to the setting type of the variable valve timing mechanism according to the actual engine load and the target engine load may include:
S510, determining a load condition flag corresponding to the setting type according to the actual engine load;
S520, determining an angle condition flag corresponding to the setting type according to the anti-super knock angle; and
S530, determining the anti-super knock flag according to the load condition flag and the angle condition flag.

In step S510, the load condition flag can be used to indicate whether the actual engine load meets a condition of performing anti-super knock control, that is, whether the actual engine load meets a condition of switching the anti-super knock flag to "set".

The setting type can be the intake type, and the load condition flag of the intake type can be referred to as an intake side load condition flag, which may include two states, namely a set state and a reset state. When the intake side load condition flag is in the set position, it indicates that the actual engine load meets the condition of performing anti-super knock control on the intake side, that is to say, the actual engine load meets the condition of switching the intake anti-super knock flag to set. That is, the anti-super knock control on the intake side of the vehicle is required under the current actual engine load. When the intake side load condition flag is in the reset position, it indicates that the actual engine load does not meet the condition of performing anti-super knock control on the intake side, that is to say, the actual engine load does not meet the condition of switching the intake anti-super knock flag to set. That is, the anti-super knock control on the intake side of the vehicle is not required under the current actual engine load.

It should be noted that when the setting type is the exhaust type, the load condition flag corresponding to the exhaust type can be referred to as the exhaust side load condition flag. For the introduction of the exhaust side load condition flag, reference may be made to the above introduction of the intake side load condition flag, which will not be repeated for brevity.

In step S520, the angle condition flag can be used to indicate whether the anti-super knock angle meets a condition of performing anti-super knock control, that is, whether the anti-super knock angle meets a condition of switching the anti-super knock flag to "set".

The setting type can be the intake type, and the angle condition flag of the intake type can be referred to as an intake side angle condition flag, which may include two states, namely a set state and a reset state. When the intake side angle condition flag is in the set position, it indicates that the anti-super knock angle meets the condition of performing anti-super knock control on the intake side, that is to say, the intake anti-super knock angle meets the condition of switching the intake anti-super knock flag to set. That is, the anti-super knock control on the intake side of the vehicle is required under the current intake anti-super knock angle. When the intake side angle condition flag is in the reset position, it indicates that the anti-super knock angle does not meet the condition of performing anti-super knock control on the intake side, that is to say, the intake anti-super knock angle does not meet the condition of switching the intake anti-super knock flag to set. That is, the anti-super knock control on the intake side of the vehicle is not required under the current intake anti-super knock angle.

It should be noted that when the setting type is the exhaust type, the angle condition flag corresponding to the exhaust type can be referred to as the exhaust side angle condition flag. For the introduction of the exhaust side angle condition flag, reference may be made to the above introduction of the intake side angle condition flag, which will not be repeated for brevity.

In step S530, after determining the load condition flag corresponding to the setting type and the angle condition flag corresponding to the setting type, the vehicle can comprehensively determine the anti-super knock flag based on the above load condition flag and angle condition flag, thereby determining whether the anti-super knock control is necessary for the vehicle.

If it is determined that the load condition flag is set and the angle condition flag is set, then the anti-super knock flag is determined as set.

If it is determined that the load condition flag is reset, and/or, the angle condition flag is reset, then the anti-super knock flag is determined as reset. That is, if it is determined that the load condition flag is reset and the angle condition flag is set, then the anti-super knock flag is determined as reset. If it is determined that the load condition flag is set and the angle condition flag is reset, then the anti-super knock flag is determined as reset. If it is determined that the load condition flag is reset and the angle condition flag is reset, then the anti-super knock flag is determined as reset.

In the method, the angle condition flag and load condition flag corresponding to the setting type can be determined first, and then the anti-super knock flag corresponding to the setting type can be determined based on the above angle condition flag and load condition flag. That is, the method allows for a comprehensive determination of whether anti-super knock control is necessary for the angle of the VVT corresponding to the setting type, based on angle situation of the VVT and load situation of the engine corresponding to the setting type. This makes the anti-super knock control more accurate, and more precisely prevents the occurrence of the super knock.

The present embodiment provides a control method that can be applied to a vehicle. Referring to FIG. 6, in the method, the determination of a load condition flag corresponding to the setting type according to the actual engine load may include:
S610, acquiring an idle speed flag, an upper limit load threshold corresponding to the setting type, a lower limit load threshold corresponding to the setting type, and an original load condition flag corresponding to the setting type; and
S620, determining the target load condition flag according to the idle speed flag, the upper limit load threshold, the lower limit load threshold, the actual engine load, and the original load condition flag.

In step S610, the idle speed flag can indicate whether the vehicle is in an idle speed state. When the idle speed flag is in the reset position, it indicates that the vehicle is in the idle speed state. When the idle speed flag is in the set position, it indicates that the vehicle is not in the idle speed state. The vehicle can acquire the state of the vehicle's idle speed flag through the detection of an apparatus for detecting the idle speed flag, or through other means, and there is no limitation in this regard.

The original load condition flag can be the last determined target load condition flag. For example, if the i-th determined target load condition flag is set, then when determining the state of the target load condition flag for the (i+1)-th time, the corresponding original load condition flag is the target load condition flag determined in the i-th round, that is, the original load condition flag is set. Among them, i is a positive integer greater than or equal to 1. After determining the state of the target load condition flag each time, its information can be stored in the vehicle's storage unit, and it can be subsequently used as the original load condition flag for the next determination of the target load condition flag. When determining the target load condition flag next time, the original load condition flag can be acquired from the storage unit.

It should be noted that when determining the state of the target load condition flag for the first time, the corresponding original load condition flag is reset. The original load condition flag corresponding to the intake type can be referred to as an intake side original load condition flag, and the original load condition flag corresponding to the exhaust type can be referred to as an exhaust side original load condition flag.

The upper limit load threshold can characterize a maximum value of the actual engine load that will not cause the super knock. The lower limit load threshold can characterize a minimum value of the actual engine load that will not cause the super knock. The above upper limit load threshold and lower limit load threshold can be determined through experiments or other methods, and there is no limitation in this regard.

The upper limit load threshold and the lower limit load threshold can be pre-set in the vehicle's storage unit. In this way, the vehicle can acquire the upper limit load threshold and the lower limit load threshold from the storage unit. Of course, the vehicle can also acquire the above upper limit load threshold and lower limit load threshold through other methods, and there is no limitation in this regard.

It should be noted that when the setting type is the intake type, the upper limit load threshold of the intake type can be referred to as a first threshold, the lower limit load threshold of the intake type can be referred to as a second threshold, and the original load condition flag of the intake type can be referred to as an intake side original load condition flag. When the setting type is the exhaust type, the upper limit load threshold of the exhaust type can be referred to as a third threshold, the lower limit load threshold of the exhaust type can be referred to as a fourth threshold, and the original load condition flag of the exhaust type can be referred to as an exhaust side original load condition flag.

In step S620, after determining the idle speed flag, the upper limit load threshold corresponding to the setting type, the lower limit load threshold corresponding to the setting type, and the original load condition flag corresponding to the setting type, the vehicle can determine the target load condition flag corresponding to the setting type based on the above information.

If it is determined that the actual engine load is greater than the above upper limit load threshold, and the idle speed flag is switched from reset to set, then the target load condition flag is determined as set.

If it is determined that the actual engine load is less than the lower limit load threshold, and/or, the idle speed flag is switched from set to reset, then the target load condition flag is determined as reset. That is to say, if it is determined that the actual engine load is less than the lower limit load threshold and the idle speed flag is switched from reset to set, then the target load condition flag is reset. If it is determined that the actual engine load is greater than the lower limit load threshold and the idle speed flag is switched from set to reset, then the target load condition flag is determined as set. If it is determined that the actual engine load is less than the lower limit load threshold and the idle speed flag is switched from set to reset, then the target load condition flag is determined as set.

If it is determined that the actual engine load is greater than or equal to the lower limit load threshold and less than or equal to the upper limit load threshold, the target load condition flag is determined as the original load condition flag. That is to say, in this case, if the original load condition flag is set, then the target load condition flag is determined as set. If the original load condition flag is reset, then the target load condition flag is determined as reset.

In some implementations, when the setting type is the intake type, if it is determined that the actual engine load is greater than the above first threshold and the idle speed flag is switched from reset to set, then the target load condition flag is determined as set. If it is determined that the actual engine load is less than the second threshold, and/or, the idle speed flag is switched from set to reset, then the target load condition flag is determined as reset. If it is determined that the actual engine load is greater than or equal to the second threshold and less than or equal to the first threshold, then the target load condition flag is determined as the original load condition flag.

It should be noted that for the introduction of the setting type being the exhaust type, reference may be made to the above introduction of the setting type being the intake type, which will not be repeated for brevity. In addition to determining the target load condition flag through the above methods, the target load condition flag can also be determined through other methods, and there is no limitation in this regard.

In the method, the target load condition flag is determined by comprehensively considering the upper limit load threshold, the lower limit load threshold, the idle speed flag, and the original load condition flag. The entire method is simple and reliable. The efficiency of determining the target load condition flag can be further improved, thereby enhancing the efficiency of the anti-super knock control, and better preventing the occurrence of the super knock.

The present embodiment provides a control method that can be applied to a vehicle. Referring to FIG. 7, in the method, the determination of the angle condition flag corresponding to the setting type according to the anti-super knock angle may include:
S710, acquiring an initial value of the target angle corresponding to the setting type of the variable valve timing mechanism, and an actual angle corresponding to the setting type of the variable valve timing mechanism; and
S720, determining the angle condition flag according to the initial value of the target angle, the actual angle, and the anti-super knock angle.

In step S710, the vehicle can acquire a preset initial value of the target angle from its storage unit, or acquire the initial value of the target angle through other methods, and there is no limitation in this regard. The initial value of the target angle can be set according to actual situations. The initial value of the target angle can be either pre-configured at the factory or post-configured after the vehicle's delivery, and there is no limitation in this regard. After the initial value of the target angle is set, it can be modified later to better meet the requirements.

The actual angle can be acquired through the detection of an angle detection apparatus, and the vehicle can acquire the actual angle from its angle detection apparatus. Of course, the vehicle can also acquire the actual angle through other methods, and there is no limitation in this regard.

When the setting type is the intake type, the initial value of the target angle corresponding to the setting type of the VVT is the initial value of the target angle corresponding to the intake type of the VVT, and the initial value of the target angle can be referred to as an initial value of the target intake angle. The actual angle corresponding to the setting type of the VVT is the actual angle corresponding to the intake type of the VVT, and the actual angle can be referred to as an actual intake angle.

It should be noted that for the introduction of the setting type being the exhaust type, reference may be made to the above intake type, which will not be repeated for brevity. When the setting type is the exhaust type, its corresponding initial value of the target angle can be referred to as an initial value of the target exhaust angle, and its corresponding actual angle can be referred to as an actual exhaust angle.

In step S720, after acquiring the initial value of the target angle, the actual angle, and the anti-super knock angle corresponding to the setting type, the vehicle can determine the angle condition flag corresponding to the setting type based on the above information.

When the setting type includes the intake type, a greater value between the initial value of the target intake angle and the actual intake angle can be determined first, and then the relationship between the above greater value and the intake anti-super knock angle can be determined. If the above greater value is greater than or equal to the intake anti-super knock angle, the intake side angle condition flag is determined as set. If the above greater value is less than the intake anti-super knock angle, the intake side angle condition flag is determined as reset.

When the setting type includes the exhaust type, a smaller value between the initial value of the target exhaust angle and the actual exhaust angle can be determined first, and then the relationship between the above smaller value and the exhaust anti-super knock angle can be determined. If the above smaller value is less than or equal to the exhaust anti-super knock angle, the exhaust side angle condition flag is determined as set. If the above smaller value is greater than the exhaust anti-super knock angle, the exhaust side angle condition flag is determined as reset.

In the method, the angle condition flag corresponding to the setting type can be determined based on information such as the initial value of the target angle, the actual angle, the anti-super knock angle corresponding to the setting type of the VVT, etc., thereby determining whether the angle corresponding to the setting type of the VVT meets a condition of the anti-super knock control. The entire method is simple and reliable. In this way, the occurrence of the super knock can be better avoided through the efficient and accurate determination of the angle condition flag.

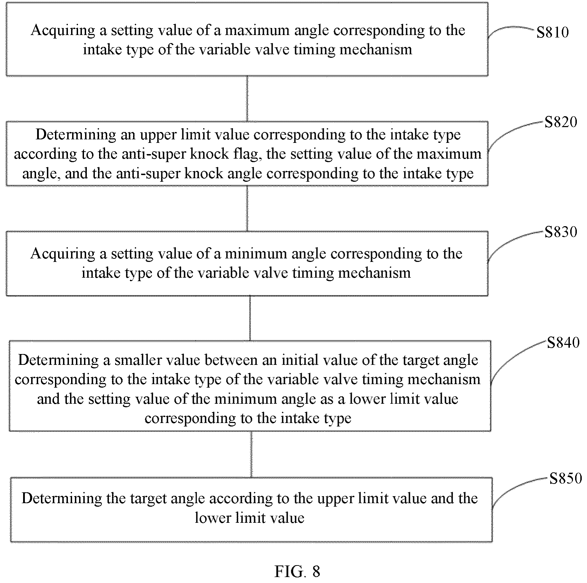

The present embodiment provides a control method that can be applied to a terminal. Referring to FIG. 8, in the method, when the setting type includes an intake type, the determination of the target angle according to the anti-super knock angle and the anti-super knock flag may include:
S810, acquiring a setting value of a maximum angle corresponding to the intake type of the variable valve timing mechanism;
S820, determining an upper limit value corresponding to the intake type according to the anti-super knock flag, the setting value of the maximum angle, and the anti-super knock angle corresponding to the intake type;
S830, acquiring a setting value of a minimum angle corresponding to the intake type of the variable valve timing mechanism;
S840, determining a smaller value between an initial value of the target angle corresponding to the intake type of the variable valve timing mechanism and the setting value of the minimum angle as a lower limit value corresponding to the intake type; and
S850, determining the target angle according to the upper limit value and the lower limit value.

In step S810, the setting value of the maximum angle corresponding to the intake type of the VVT can be referred to as a setting value of a maximum intake angle. The vehicle can acquire a pre-stored setting value of the maximum intake angle from the storage unit. The setting value of the maximum intake angle can be set according to actual situations. The setting value of the maximum intake angle can be either pre-configured at the factory or post-configured after the vehicle's delivery, and there is no limitation in this regard. After the setting value of the maximum intake angle is set, it can be modified later to better meet different requirements.

In step S820, the anti-super knock flag corresponding to the intake type can be referred to as the intake anti-super knock flag, and the anti-super knock angle corresponding to the intake type can be referred to as the intake anti-super knock angle. The upper limit value corresponding to the intake type can be referred to as an intake upper limit value.

When the intake anti-super knock flag is set, the intake anti-super knock angle can be determined as the intake upper limit value. When the intake anti-super knock flag is reset, the setting value of the maximum intake angle can be determined as the intake upper limit value.

It should be noted that in addition to determining the intake upper limit value through the above method, the intake upper limit value can also be determined through other methods. There is no limitation in this regard.

In step S830, a setting value of the minimum angle corresponding to the intake type of the VVT can be referred to as a setting value of a minimum intake angle. The vehicle can acquire a pre-stored setting value of the minimum intake angle from the storage unit. The setting value of the minimum intake angle can be set according to actual situations. The setting value of the minimum intake angle can be either pre-configured at the factory or post-configured after the vehicle's delivery, and there is no limitation in this regard. After the setting value of the minimum intake angle is set, it can be modified later to better meet different requirements.

In step S840, the initial value of the target angle corresponding to the intake type of the VVT can be referred to as the initial value of the target intake angle. The lower limit value corresponding to the intake type can be referred to as an intake lower limit value.

In the step, after acquiring the initial value of the target intake angle and the setting value of the minimum intake angle, the vehicle can compare the initial value of the target intake angle and the setting value of the minimum intake angle, select a smaller value from them, and then determine the smaller value as the intake lower limit value.

In step S850, the target angle corresponding to the intake type can be referred to as the target intake angle. The intake upper limit value can be used as the maximum value of the target intake angle, and the intake lower limit value can be used as the minimum value of the target intake angle, so the target intake angle can be determined. The target intake angle can be an angle range or an accurate angle value, and there is no limitation in this regard.

It should be noted that the above angle range and angle values need to be within the intake upper limit value and intake lower limit value to avoid the occurrence of the super knock.

In the method, based on the intake anti-super knock flag, the intake upper limit value can be determined from the setting value of the maximum intake angle and the intake anti-super knock angle, and the smaller value of the setting value of the minimum intake angle and the initial value of the intake target can be determined as the intake lower limit value, thereby obtaining the angle range to which the target intake angle belongs. This can better avoid the super knock caused by the intake side, reduce the probability of the super knock, better protect the engine, and achieve improved driving performance and enhanced driving experience.

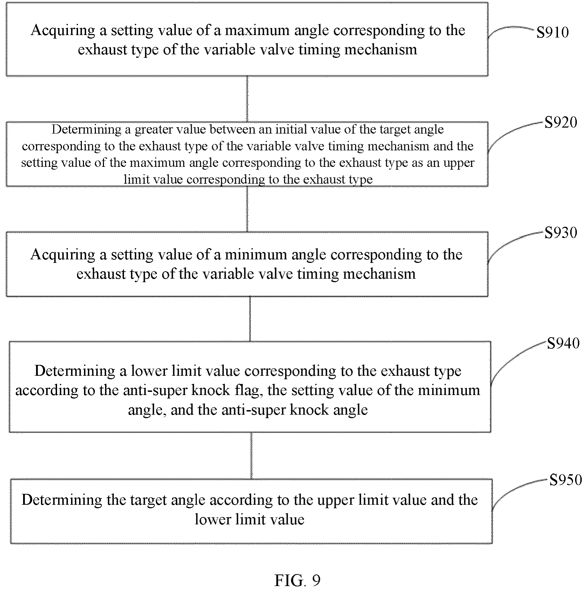

The present embodiment provides a control method that can be applied to a vehicle. Referring to FIG. 9, in the method, when the setting type includes an exhaust type, the determination of the target angle according to the anti-super knock angle and the anti-super knock flag may include:
S910, acquiring a setting value of a maximum angle corresponding to the exhaust type of the variable valve timing mechanism;
S920, determining a greater value between an initial value of the target angle corresponding to the exhaust type of the variable valve timing mechanism and the setting value of the maximum angle corresponding to the exhaust type as an upper limit value corresponding to the exhaust type;
S930, acquiring a setting value of a minimum angle corresponding to the exhaust type of the variable valve timing mechanism;
S940, determining an upper limit value according to the anti-super knock flag, the setting value of the minimum angle, and the anti-super knock angle; and
S950, determining the target angle according to the upper limit value and the lower limit value.

In step S910, the setting value of the maximum angle corresponding to the exhaust type of the VVT can be referred to as a setting value of a maximum exhaust angle. For the setting method and acquisition method of the setting value of the maximum exhaust angle, reference can be made to the setting value of the maximum intake angle, which will not be repeated for brevity.

In step S920, the initial value of the target angle corresponding to the exhaust type of the VVT can be referred to as the initial value of the target exhaust angle. The upper limit value corresponding to the exhaust type can be referred to as an exhaust upper limit value.

In the step, after acquiring the initial value of the target exhaust angle and the setting value of the maximum exhaust angle, the vehicle can compare the initial value of the target exhaust angle and the setting value of the maximum exhaust angle, select a greater value from them, and then determine the greater value as the exhaust upper limit value.

In step S930, a setting value of the minimum angle corresponding to the exhaust type of the VVT can be referred to as a setting value of a minimum exhaust angle. For the setting method and acquisition method of the setting value of the minimum exhaust angle, reference can be made to the setting value of the minimum intake angle, which will not be repeated for brevity.

In step S940, the anti-super knock flag corresponding to the exhaust type can be referred to as the exhaust anti-super knock flag, and the anti-super knock angle corresponding to the exhaust type can be referred to as the exhaust anti-super knock angle. The lower limit value corresponding to the exhaust type can be referred to as an exhaust lower limit value.

When the exhaust anti-super knock flag is set, the exhaust anti-super knock angle can be determined as the exhaust lower limit value. When the exhaust anti-super knock flag is reset, the setting value of the minimum exhaust angle can be determined as the exhaust lower limit value.

It should be noted that in addition to determining the exhaust lower limit value through the above method, the exhaust lower limit value can also be determined through other methods. There is no limitation in this regard.

In step S950, the target angle corresponding to the exhaust type can be referred to as the target exhaust angle. The exhaust upper limit value can be used as the maximum value of the target exhaust angle, and the exhaust lower limit value can be used as the minimum value of the target intake angle, so the target exhaust angle can be determined. The target exhaust angle can be an angle range or an accurate angle value, and there is no limitation in this regard.

It should be noted that the above angle range and angle values need to be within the exhaust upper limit value and exhaust lower limit value to avoid the occurrence of the super knock.

In the method, based on the exhaust anti-super knock flag, the exhaust lower limit value can be determined from the setting value of the minimum exhaust angle and the exhaust anti-super knock angle, and the greater value of the setting value of the maximum exhaust angle and the initial value of the exhaust target can be determined as the exhaust upper limit value, thereby acquiring the angle range to which the target exhaust angle belongs. This can better avoid the super knock caused by the exhaust side, reduce the probability of the super knock, better protect the engine, and achieve improved better driving performance and enhanced driving experience.

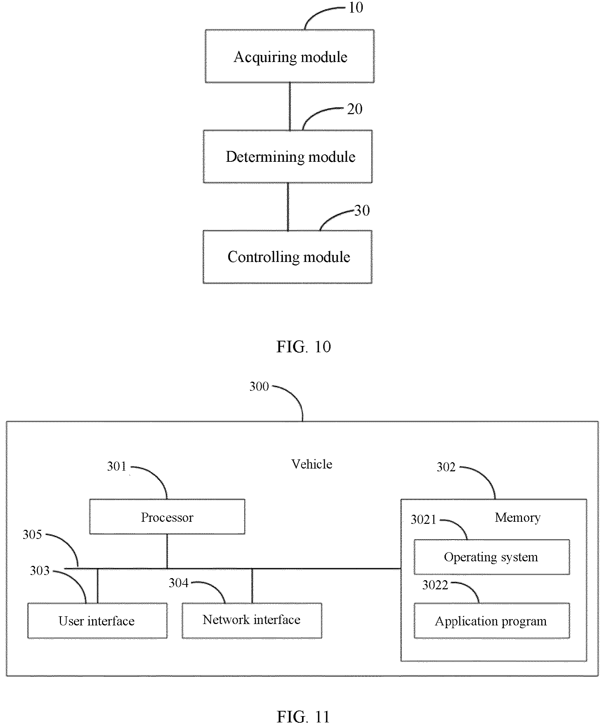

The present embodiment provides a control apparatus that can be applied to a vehicle. The apparatus can be configured to implement the above control method. For example, referring to FIG. 10, the apparatus may include an acquiring module 10, a determining module 20, and a controlling module 30. In the process of implementing the above method:
the acquiring module 10, configured to acquire a target engine load corresponding to a setting type, an engine speed, and an actual engine load;
the determining module 20, configured to determine a target angle corresponding to the setting type of a variable valve timing mechanism according to the engine speed, the actual engine load and the target engine load;
the controlling module 30, configured to control an angle corresponding to the setting type of the variable valve timing mechanism according to the target angle.

The present embodiment provides a control apparatus that can be applied to the vehicle. Referring to FIG. 10, in the apparatus, the determining module 20 can be configured to:
determine an anti-super knock angle corresponding to the setting type of the variable valve timing mechanism and an anti-super knock flag corresponding to the setting type of the variable valve timing mechanism according to the engine speed, the actual engine load and the target engine load;
determine the target angle according to the anti-super knock angle and the anti-super knock flag.

The present embodiment provides a control apparatus that can be applied to the vehicle. Referring to FIG. 10, in the apparatus:
the acquiring module 10 can be configured to acquire a state of a load selection switch corresponding to the setting type;
the determining module 20 can be configured to determine a selected engine load corresponding to the setting type according to the state of the load selection switch, the actual engine load and the target engine load; and determine the anti-super knock angle according to the engine speed and the selected engine load.

The present embodiment provides a control apparatus that can be applied to the vehicle. Referring to FIG. 10, in the apparatus, the determining module 20 can be configured to:
if it is determined that the load selection switch is in a first state, determine the actual engine load as the selected engine load;
if it is determined that the load selection switch is in a second state, determine the target engine load as the selected engine load.

The present embodiment provides a control apparatus that can be applied to the vehicle. Referring to FIG. 10, in the apparatus:
the acquiring module 10 can be configured to acquire configuration information corresponding to the setting type, where the configuration information includes a correspondence among the engine speed, the selected engine load, and the anti-super knock angle;
the determining module 20 can be configured to determine the anti-super knock angle according to the configuration information, the engine speed, and the selected engine load.

The present embodiment provides a control apparatus that can be applied to the vehicle. Referring to FIG. 10, in the apparatus, the determining module 20 can be configured to:
determine a load condition flag corresponding to the setting type according to the actual engine load;
determine an angle condition flag corresponding to the setting type according to the anti-super knock angle;
determine the anti-super knock flag according to the load condition flag and the angle condition flag.

The present embodiment provides a control apparatus that can be applied to the vehicle. Referring to FIG. 10, in the apparatus:
the acquiring module 10 can be configured to acquire an idle speed flag, an upper limit load threshold corresponding to the setting type, a lower limit load threshold corresponding to the setting type, and an original load condition flag corresponding to the setting type;
the determining module 20 can be configured to determine the target load condition flag according to the idle speed flag, the upper limit load threshold, the lower limit load threshold, the actual engine load, and the original load condition flag.

The present embodiment provides a control apparatus that can be applied to the vehicle. Referring to FIG. 10, in the apparatus, the determining module 20 can be configured to:
if it is determined that the actual engine load is greater than the upper limit load threshold, and the idle speed flag is switched from reset to set, then determine the target load condition flag as set;
if it is determined that the actual engine load is less than the lower limit load threshold, and/or, the idle speed flag is switched from set to reset, then determine the target load condition flag as reset;
if it is determined that the actual engine load is greater than or equal to the lower limit load threshold and less than or equal to the upper limit load threshold, then determine the target load condition flag as the original load condition flag.

The present embodiment provides a control apparatus that can be applied to the vehicle. Referring to FIG. 10, in the apparatus, the determining module 20 can be configured to:
if it is determined that the load condition flag is set, and the angle condition flag is set, then determine the anti-super knock flag as set;
if it is determined that the load condition flag is reset, and/or, the angle condition flag is reset, then determine the anti-super knock flag as reset.

The present embodiment provides a control apparatus that can be applied to the vehicle. Referring to FIG. 10, in the apparatus:
the acquiring module 10 can be configured to acquire an initial value of the target angle corresponding to the setting type of the variable valve timing mechanism, and an actual angle corresponding to the setting type of the variable valve timing mechanism;
the determining module 20 can be configured to determine the angle condition flag according to the initial value of the target angle, the actual angle, and the anti-super knock angle.

The present embodiment provides a control apparatus that can be applied to the vehicle. Referring to FIG. 10, in the apparatus, the determining module 20 can be configured to:
if it is determined that a greater value between the initial value of the target angle and the actual angle is greater than or equal to the anti-super knock angle, then determine the angle condition flag as set;
if it is determined that the greater value between the initial value of the target angle and the actual angle is less than the anti-super knock angle, then determine the angle condition flag as reset.

The present embodiment provides a control apparatus that can be applied to the vehicle. Referring to FIG. 10, in the apparatus, the determining module 20 can be configured to:
if it is determined that a smaller value between the initial value of the target angle and the actual angle is less than or equal to the anti-super knock angle, then determine the angle condition flag as set;
if it is determined that the smaller value between the initial value of the target angle and the actual angle is greater than the anti-super knock angle, then determine the angle condition flag as reset.

The present embodiment provides a control apparatus that can be applied to the vehicle. Referring to FIG. 10, in the apparatus, when the setting type includes an intake type:
the acquiring module 10 can be configured to acquire a setting value of a maximum angle corresponding to the intake type of the variable valve timing mechanism;
the determining module 20 can be configured to determine an upper limit value corresponding to the intake type according to the anti-super knock flag, the setting value of the maximum angle, and the anti-super knock angle corresponding to the intake type;
the acquiring module 10 can be configured to acquire a setting value of a minimum angle corresponding to the intake type of the variable valve timing mechanism;
the determining module 20 can be configured to determine a smaller value between an initial value of the target angle corresponding to the intake type of the variable valve timing mechanism and the setting value of the minimum angle as a lower limit value corresponding to the intake type;
and can further be configured to determine the target angle according to the upper limit value and the lower limit value.

The present embodiment provides a control apparatus that can be applied to the vehicle. Referring to FIG. 10, in the apparatus, when the setting type includes an exhaust type:
the acquiring module 10 can be configured to acquire a setting value of a maximum angle corresponding to the exhaust type of the variable valve timing mechanism;
the determining module 20 can be configured to determine a greater value between an initial value of the target angle corresponding to the exhaust type of the variable valve timing mechanism and the setting value of the maximum angle corresponding to the exhaust type as an upper limit value corresponding to the exhaust type;
the acquiring module 10 can be configured to acquire a setting value of a minimum angle corresponding to the exhaust type of the variable valve timing mechanism;
the determining module 20 can be configured to determine a lower limit value corresponding to the exhaust type according to the anti-super knock flag, the setting value of the minimum angle, and the anti-super knock angle;
and can further be configured to determine the target angle according to the upper limit value and the lower limit value.

The present embodiment provides a control apparatus that can be applied to the vehicle. In the apparatus, the setting type includes an intake type and/or an exhaust type.

The present embodiment provides a vehicle. Referring to FIG. 11, the vehicle 300 includes at least one processor 301, a memory 302, at least one network interface 304, and other user interfaces 303. The various components in the vehicle 300 are coupled together through a bus system 305. It can be understood that the bus system 305 is used to achieve connection communication between these components. The bus system 305 includes not only a data bus, but also a power bus, a control bus, and a status signal bus. However, for the sake of clarity, various buses are labeled as the bus system 305 in FIG. 3.

The user interface 303 may include a displayer, a keyboard, or a pointing device (such as a mouse, a trackball (trackball), a touchpad, or a touchscreen, etc.).

It can be understood that the memory 302 in the embodiments of the present application may be a volatile memory or a non-volatile memory, or may include both the volatile memory and the non-volatile memory. The non-volatile memory can be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory can be a Random Access Memory (Random Access Memory, RAM), which is used as an external cache. By way of example but not limitation, many forms of RAM are available, such as a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchronous link dynamic random access memory (Synch link DRAM, SLDRAM), and a direct rambus random access memory (Direct Rambus RAM, DRRAM). The memory 302 described in the present article is intended to include, but is not limited to, these and any other suitable types of memory.

In some implementations, the memory 302 stores the following elements, executable units or data structures, or subsets thereof, or extended sets thereof: an operating system 3021 and an application program 3022.

The operating system 3021 includes various system programs, such as a framework layer, a core library layer, a driver layer, etc., used to implement various basic services and handle hardware based tasks. The application program 3022 includes various applications such as a media player (Media Player), a browser (Browser), etc., used to implement various application services. The program for implementing the embodiments of the present application can be included in the application program 3022.

In the embodiments of the present application, by calling the program or instructions stored in the memory 302, specifically the program or instructions stored in the application program 3022, the processor 301 is configured to execute the method steps provided by the method embodiments, which for example include: acquiring a target engine load corresponding to a setting type, an engine speed, and an actual engine load; determining a target angle corresponding to the setting type of a variable valve timing mechanism according to the engine speed, the actual engine load and the target engine load; and controlling an angle corresponding to the setting type of the variable valve timing mechanism according to the target angle.

The method disclosed in the above embodiments of the present application can be applied to the processor 301 or implemented by the processor 301. The processor 301 may be an integrated circuit chip with signal processing capabilities. In the implementation process, each step of the above method can be completed through hardware integrated logic circuits or software instructions in the processor 301. The above processor 301 can be a general-purpose processor, a digital signal processor (Digital Signal Processor, DSP), an application specific integrated circuit (Application Specific Integrated Circuit, ASIC), a field programmable gate array (Field Programmable Gate Array, FPGA), or other programmable logic devices, discrete gates or transistor logic devices, or discrete hardware components. The disclosed methods, steps, and logical diagrams in the embodiments of the present application can be implemented or executed. A general-purpose processor can be a microprocessor or any conventional processor. The steps of the method disclosed in the embodiments of the present application can be directly reflected as being executed by a hardware decoding processor, or executed by a combination of hardware and software units in the decoding processor. Software units can be located in mature storage media in the present field, such as a random access memory, a flash memory, a read-only memory, a programmable read-only memory, or an electrically erasable programmable memory, a register, etc. The storage medium is located in the memory 302, and the processor 301 reads the information from the memory 302 and completes the steps of the above method in conjunction with its hardware.

It can be understood that these embodiments described in the article can be implemented using hardware, software, firmware, middleware, microcode, or a combination thereof. For a hardware implementation, the processing unit can be implemented in one or more application specific integrated circuits (Application Specific Integrated Circuits, ASIC), digital signal processors (Digital Signal Processing, DSP), digital signal processing devices (DSPDevice, DSPD), programmable logic devices (Programmable Logic Device, PLD), field programmable gate arrays (Field-Programmable Gate Array, FPGA), general-purpose processors, controllers, microcontrollers, microprocessors, other electronic units used to perform the functions described in the present application, or combinations thereof.

For a software implementation, the techniques described in the article can be achieved by executing the units that perform the functions described in the article. Software code(s) can be stored in the memory and executed by the processor. The memory can be implemented within the processor or externally to the processor.

The vehicle provided in the present embodiment can be the vehicle shown in FIG. 3, which can execute all the steps of the control method of the vehicle shown in FIG. 1, thereby achieving the technical effects of the control method of the vehicle shown in FIG. 1. Reference may be made to the relevant description in FIG. 1 for details. For the sake of simplicity, it will not be repeated here.

The present embodiment also provides a storage medium (a computer-readable storage medium). The storage medium here stores one or more programs. The storage medium may include a volatile memory, such as a random access memory. The memory can also include a non-volatile memory, such as a read-only memory, a flash memory, a hard drive, or a solid-state drive. The memory may also include a combination of the above-mentioned types of memory.

When one or more programs in the storage medium can be executed by one or more processors, the control method of the vehicle executed at the control apparatus side of the vehicle as described above is implemented.

The processor is configured to execute the control program of the vehicle stored in the memory, to implement the following steps of the control method executed in the vehicle: acquiring a target engine load corresponding to a setting type, an engine speed, and an actual engine load; determining a target angle corresponding to the setting type of a variable valve timing mechanism according to the engine speed, the actual engine load and the target engine load; and controlling an angle corresponding to the setting type of the variable valve timing mechanism according to the target angle.

Professionals should further realize that the units and algorithm steps in each example described the embodiments disclosed in this article can be implemented using electronic hardware, computer software, or a combination of both. In order to clearly illustrate the interchangeability of the hardware and the software, the composition and steps of each example have been generally described in the above description according to their functions. Whether these functions are executed in the hardware or the software depends on the specific application and design constraints of the technical solution. Professional technicians can use different methods to achieve the described functions for each specific application, but such implementation should not be considered beyond the scope of the present application.

It should be noted that the terms "an implementation", "embodiments," "exemplary embodiments," "some embodiments," etc. mentioned in the specification indicate that the described embodiments may include specific features, structures, or characteristics, but not necessarily every embodiment includes that specific feature, structure, or characteristic. Furthermore, such terms may not necessarily refer to the same embodiment. Furthermore, when describing specific features, structures, or characteristics in conjunction with embodiments, it is within the knowledge of the person skilled in the art to implement such features, structures, or characteristics in conjunction with other embodiments that are explicitly or implicitly described.

It should be noted that in the article, relationship terms such as "first" and "second" are only used to distinguish an entity or an operation from another, and do not necessarily require or imply any actual relationship or order between these entities or operations. Moreover, the terms "include", "comprise", or any other variation thereof are intended to encompass non-exclusive inclusion, such that a process, a method, an item, or a device that includes a series of elements includes not only those elements, but also other elements not explicitly listed, or elements inherent to such process, method, item, or device. Without further limitations, the element defined by the statement "includes one..." does not exclude the existence of other identical elements in the process, method, item, or device that includes the element.

The above embodiments are only provided to fully illustrate the preferred embodiments of the present application, and the protection scope of the present application is not limited to these embodiments. Any equivalent substitution or transformation made by the person skilled in the art based on the present application is within the protection scope of the present application.

## Claims

1. A control method, wherein the control method comprises:
acquiring a target engine load corresponding to a setting type, an engine speed, and an actual engine load;
determining a target angle corresponding to the setting type of a variable valve timing mechanism according to the engine speed, the actual engine load and the target engine load;
controlling an angle corresponding to the setting type of the variable valve timing mechanism according to the target angle.

2. The control method according to claim 1, wherein the determining the target angle corresponding to the setting type of the variable valve timing mechanism according to the engine speed, the actual engine load and the target engine load, comprises:
determining an anti-super knock angle corresponding to the setting type of the variable valve timing mechanism and an anti-super knock flag corresponding to the setting type of the variable valve timing mechanism according to the engine speed, the actual engine load and the target engine load;
determining the target angle according to the anti-super knock angle and the anti-super knock flag.

3. The control method according to claim 2, wherein the determining the anti-super knock angle corresponding to the setting type of the variable valve timing mechanism and the anti-super knock flag corresponding to the setting type of the variable valve timing mechanism according to the engine speed, the actual engine load and the target engine load, comprises:
acquiring a state of a load selection switch corresponding to the setting type;
determining a selected engine load corresponding to the setting type according to the state of the load selection switch, the actual engine load and the target engine load;
determining the anti-super knock angle according to the engine speed and the selected engine load.

4. The control method according to claim 3, wherein the determining the selected engine load corresponding to the setting type according to the state of the load selection switch, the actual engine load and the target engine load, comprises:
if it is determined that the load selection switch is in a first state, determining the actual engine load as the selected engine load;
if it is determined that the load selection switch is in a second state, determining the target engine load as the selected engine load.

5. The control method according to claim 3, wherein the determining the anti-super knock angle according to the engine speed and the selected engine load, comprises:
acquiring configuration information corresponding to the setting type, wherein the configuration information comprises a correspondence among the engine speed, the selected engine load, and the anti-super knock angle;
determining the anti-super knock angle according to the configuration information, the engine speed, and the selected engine load.

6. The control method according to claim 3, wherein the determining the anti-super knock angle corresponding to the setting type of the variable valve timing mechanism and the anti-super knock flag corresponding to the setting type of the variable valve timing mechanism according to the actual engine load and the target engine load, comprises:
determining a load condition flag corresponding to the setting type according to the actual engine load;
determining an angle condition flag corresponding to the setting type according to the anti-super knock angle;
determining the anti-super knock flag according to the load condition flag and the angle condition flag.

7. The control method according to claim 6, wherein the determining the target load condition flag corresponding to the setting type according to the actual engine load, comprises:
acquiring an idle speed flag, an upper limit load threshold corresponding to the setting type, a lower limit load threshold corresponding to the setting type, and an original load condition flag corresponding to the setting type;
determining the target load condition flag according to the idle speed flag, the upper limit load threshold, the lower limit load threshold, the actual engine load, and the original load condition flag.

8. The control method according to claim 7, wherein the determining the target load condition flag according to the idle speed flag, the upper limit load threshold, the lower limit load threshold, the actual engine load, and the original load condition flag, comprises:
if it is determined that the actual engine load is greater than the upper limit load threshold, and the idle speed flag is switched from reset to set, then determining the target load condition flag as set;
if it is determined that the actual engine load is less than the lower limit load threshold, and/or, the idle speed flag is switched from set to reset, then determining the target load condition flag as reset;
if it is determined that the actual engine load is greater than or equal to the lower limit load threshold and less than or equal to the upper limit load threshold, then determining the target load condition flag as the original load condition flag.

9. The control method according to claim 6, wherein the determining the anti-super knock flag according to the load condition flag and the angle condition flag, comprises:
if it is determined that the load condition flag is set, and the angle condition flag is set, then determining the anti-super knock flag as set;
if it is determined that the load condition flag is reset, and/or, the angle condition flag is reset, then determining the anti-super knock flag as reset.

10. The control method according to claim 6, wherein the determining the angle condition flag corresponding to the setting type according to the anti-super knock angle, comprises:
acquiring an initial value of the target angle corresponding to the setting type of the variable valve timing mechanism, and an actual angle corresponding to the setting type of the variable valve timing mechanism;
determining the angle condition flag according to the initial value of the target angle, the actual angle, and the anti-super knock angle.

11. The control method according to claim 10, wherein when the setting type comprises an intake type, the determining the angle condition flag according to the initial value of the target angle, the actual angle, and the anti-super knock angle, comprises: if it is determined that a greater value between the initial value of the target angle and the actual angle is greater than or equal to the anti-super knock angle, then determining the angle condition flag as set; if it is determined that the greater value between the initial value of the target angle and the actual angle is less than the anti-super knock angle, then determining the angle condition flag as reset.

12. The control method according to claim 10, wherein when the setting type comprises an exhaust type, the determining the angle condition flag according to the initial value of the target angle, the actual angle, and the anti-super knock angle, comprises: if it is determined that a smaller value between the initial value of the target angle and the actual angle is less than or equal to the anti-super knock angle, then determining the angle condition flag as set; if it is determined that the smaller value between the initial value of the target angle and the actual angle is greater than the anti-super knock angle, then determining the angle condition flag as reset.

13. The control method according to claim 2, wherein when the setting type comprises an intake type, the determining the target angle according to the anti-super knock angle and the anti-super knock flag, comprises: acquiring a setting value of a maximum angle corresponding to the intake type of the variable valve timing mechanism; determining an upper limit value corresponding to the intake type according to the anti-super knock flag, the setting value of the maximum angle, and the anti-super knock angle corresponding to the intake type; acquiring a setting value of a minimum angle corresponding to the intake type of the variable valve timing mechanism; determining a smaller value between an initial value of the target angle corresponding to the intake type of the variable valve timing mechanism and the setting value of the minimum angle as a lower limit value corresponding to the intake type; determining the target angle according to the upper limit value and the lower limit value.

14. The control method according to claim 2, wherein when the setting type comprises an exhaust type, the determining the target angle according to the anti-super knock angle and the anti-super knock flag, comprises: acquiring a setting value of a maximum angle corresponding to the exhaust type of the variable valve timing mechanism; determining a greater value between an initial value of the target angle corresponding to the exhaust type of the variable valve timing mechanism and the setting value of the maximum angle corresponding to the exhaust type as an upper limit value corresponding to the exhaust type; acquiring a setting value of a minimum angle corresponding to the exhaust type of the variable valve timing mechanism; determining a lower limit value corresponding to the exhaust type according to the anti-super knock flag, the setting value of the minimum angle, and the anti-super knock angle; determining the target angle according to the upper limit value and the lower limit value.

15. The control method according to any one of claims 1-10, wherein the setting type comprises an intake type and/or an exhaust type.

16. A control apparatus, comprising:
an acquiring module, configured to acquire a target engine load corresponding to a setting type, and an actual engine load;
a determining module, configured to determine a target angle corresponding to the setting type of a variable valve timing mechanism according to the engine speed, the actual engine load and the target engine load;
a controlling module, configured to control an angle corresponding to the setting type of the variable valve timing mechanism according to the target angle.

17. A vehicle, comprising a processor and a memory, wherein the processor is configured to execute a control program of the vehicle stored in the memory to implement the control method according to any one of claims 1-15.

18. A storage medium, wherein the storage medium stores one or more programs, the one or more programs are executable by one or more processors to implement the control method according to any one of claims 1-15.
